# EUROPÄISCHE PATENTSCHRIFT

(11) **EP 0 881 372 B1**
(45) Veröffentlichungstag und Bekanntmachung des Hinweises auf die Patenterteilung: **28.03.2001**
(21) Anmeldenummer: 98890145.0
(22) Anmeldetag: 19.05.1998
(51) Int. Cl.: F02B 23/10

(54) **Viertakt-Brennkraftmaschine mit Fremdzündung und direkter Einspritzung**
Four-stroke engine with controlled ignition and direct injection
Moteur à quatre temps à allumage commandé et à injection directe

(30) Priorität: 28.05.1997 AT 32597 U
(43) Veröffentlichungstag der Anmeldung: 02.12.1998
(73) Patentinhaber: AVL List GmbH, 8020 Graz (AT)
(72) Erfinder: Wirth, Martin, Dr. Dipl.-Ing., 8151 Hitzendorf (AT); Piock, Walter, Dr., 8151 Hitzendorf (AT)
(74) Vertreter: Babeluk, Michael, Dipl.-Ing. Mag.

(56) Entgegenhaltungen:
- EP-A- 0 741 237
- US-A- 4 788 942
- US-A- 5 351 665

## Beschreibung

Die Erfindung betrifft eine Viertakt-Brennkraftmaschine mit Fremdzündung und direkter Einspritzung des Kraftstoffes in den Brennraum, mit einem hin- und hergehenden Kolben pro Zylinder und einer vom Zylinderkopf gebildeten Brennraumdeckfläche mit mindestens einem Auslaßventil und mindestens einem Einlaßventil, mit mindestens einem drallerzeugencl ausgebildeten Einlaßkanal, sowie einer exzentrisch in den Brennraum mündenden Kraftstoffeinspritzeinrichtung und einer in der Brennraumdeckfläche angeordneten Zündeinrichtung, wobei der durch Kolben und Zylinderkopf gebildete Brennraum durch zumindest zum Teil durch den Kolben gebildete Einschnürungen in mindestens zwei Teilräume unterteilt ist und die vom Kolbenboden gebildeten Wände der Teilräume als erste Strömungsleitflächen für die Drallströmung ausgebildet sind.

Ziel des dargestellten Brennverfahrens ist die Nutzung der beim Einlaßvorgang erzeugten Gasströmung im Zylinder der Brennkraftmaschine, der Anordnung des Einspritzorgans sowie der Geometrie des Brennraumes zur Erzeugung einer den Verbrennungsvorgang optimierenden Gemischverteilung.

Ständig steigende Anforderungen an den Kraftstoffverbrauch und die Reduktion der Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z. B. durch die Verwendung einer Saugrohreinspritzung oder eines Vergasers, strömt ein Teil des in den Brennraum und Zylinder eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Zu diesen genannten Punkten kommt die notwendige Homogenisierung der Zylinderladung bei einem annähernd stöchiometrischen Mischungsverhältnis von Kraftstoff und Luft hinzu, welches eine sichere und aussetzerfreie Verbrennung sicherstellt. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 20 % geschätzt werden.

Um diese Nachteile zu verhindern bzw. zu vermindern, werden schon seit langem Versuche unternommen, fremdgezündete Verbrennungskraftmaschinen ungedrosselt zu betreiben und den Kraftstoff erst nach Beendigung der Luftansaugung wie bei einer selbstzündenden Brennkraftmaschine innerhalb des Brennraums und Zylinders oder einer unmittelbar angeschlossenen Mischkammer einzubringen.

Dabei sind grundsätzlich drei Gemischbildungssysteme zu unterscheiden:
- Flüssigkeitshochdruckeinspritzung
- Luftunterstützte Kraftstoff-Einbringung
- Gemischeinblasung.

Aus der SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den zeitlichen Minimalabstand zwischen Einspritzzeitpunkt und Zündzeitpunkt. Es ist ein hohes Druckniveau für den Einspritzvorgang notwendig, um einerseits kurze Einspritzzeiten und andererseits eine gute Zerstäubung des Kraftstoffes mit entsprechend kleinem Tropfenspektrum zu erhalten. Die Aufbereitung und Dosierung des Kraftstoffes findet gleichzeitig statt. Um nur ein örtlich begrenztes Gebiet mit brennbarem Kraftstoff-Luftgemisch zu erhalten ist es andererseits notwendig, erst sehr spät im Motorzyklus den Kraftstoff einzubringen (ggf. erst während der Kompression kurz vor der Zündung), um die Zeit für die Ausbreitung und Verdünnung des Gemisches in der Brennraumluft zu begrenzen. Die Forderungen nach genügend früher Einspritzung für vollständige Kraftstoffverdampfung und möglichst später Einspritzung zur Aufrechterhaltung der Gemischschichtung stehen daher im Gegensatz zueinander. Die Entwicklungsbemühungen müssen somit darauf gerichtet sein, einerseits die charakteristische Zeit für die Gemischaufbereitung zu verkürzen und andererseits die charakteristische Zeit der Aufrechterhaltung der gewünschten Gemisch-Schichtung zu verlängern.

Aus dieser Zielsetzung ergibt sich die allgemeine Aufgabe, aus der eingespritzten Kraftstoffmenge eine örtlich begrenzte Gemischwolke zu erzeugen, diese von der Mündung des Einspritzorgans in die Nähe der Zündkerze zu transportieren und das Gemisch innerhalb der Wolke weiter mit Brennraumluft zu vermischen. Dabei sind folgende Punkte wesentlich:
- Die Gemischwolke muß insbesondere bei niedrigen Motorlasten deutlich abgegrenzt bleiben und sich aus thermodynamischen Gründen sowie zur Reduzierung der Emissionen unverbrannter Kohlenwasserstoffe möglichst in der Mitte des Brennraumes befinden.
- Die Vermischung des eingebrachten Kraftstoffes auf ein zündfähiges und vorzugsweise stöchiometrisches Luftverhältnis muß in der kurzen Zeitspanne zwischen Einbläsezeitpunkt und Zündzeitpunkt erfolgen.
- An der Zündkerze sollte eine geringe mittlere Strömungsgeschwindigkeit und gleichzeitig ein hohes Turbulenzniveau herrschen, um die Entflammung der Gemischwolke durch den Zündfunken zu begünstigen.

Ein wichtiges Problem eines solchen Brennverfahrens liegt in den zyklischen Schwankungen des Gemischbildungsvorganges, also der Änderung des Ablaufes von einem Motorzyklus zum nächsten aufgrund der Turbulenz der Strömungsvorgänge im Ansaugsystem und Zylinder der Brennkraftmaschine. Um diese Schwänkungen so gering wie möglich zu halten, sollte im Zylinder eine Strömungsform erzeugt werden, die eine hohe Stabilität aufweist und insbesondere während der Kompressionsphase des Motorzyklusses erhalten bleibt und nicht in ungeordnete turbulente Strömungsbewegungen übergeht. Diese Forderung wird am besten von einer Drallströmung erfüllt.

Unter einer Drallströmung versteht man die Rotationströmung im Zylinder, die in an sich bekannter Weise um eine im wesentlichen zur Zylinderachse parallelen Achse erfolgt, die ebenfalls durch die Einlaßkanalgestaltung und die Einmündung des oder der Einlaßkanäle in den Brennraum und Zylinder der Brennkraftmaschine verursacht wird. Während der Kompression erfolgt nur eine geringfügige Veränderung des Strömungsbildes, da der Durchmesser des Wirbels durch die Kolbenbewegung nicht verändert wird. Vor dem oberen Totpunkt ist somit eine stabile Rotationsbewegung der angesaugten Luft im Brennraum und Zylinder gegeben.

Aus der EP 0 598 941 A1 ist das Prinzip einer Kolbenmulde bekannt, welche bei geeigneter Ausgestaltung die Strömung des um die Zylinderachse rotierenden Drallwirbels während der Kompressionsphase in Richtung auf die Zylinderachse umlenkt. Dies wird erreicht durch die nierenförmige zwei- oder dreiflügelige Ausgestaltung der Kolbenmulde. Die zwischen den Ausbuchtungen der Mulde liegenden Einzüge der Muldenseitenwand lenken die Drallströmung beim Eintritt in die Mulde während der Kompressionsphase zur Zylindermitte um, so-daß im Zentrum der Kolbenmulde durch Kollision der gegenüberliegenden und zur Zylindermitte gerichteten Strömungen ein deutlich erhöhtes Turbulenzniveau erreicht wird. Zusätzliche Turbulenzproduktion wird in dieser Art der Kolbenmulde durch Strömungsablösung an den Muldenkanten beim Eintritt der Drallströmung in die Kolbenmulde erreicht. Gleichzeitig wird in Zylindermitte im Bereich der dort vorzugsweise angeordneten Zündkerze aufgrund der rotationssymmetrischen Gestaltung eine niedrige mittlere Strömungsgeschwindigkeit erzeugt.

In der EP 0 598 941 A1 ist diese Produktion von Turbulenz das alleinige Ziel zur Beschleunigung der Verbrennung magerer Gemische und der Verdampfung von Kraftstoff-Wandfilmen.

In der EP A 0 741 237 A1 wird bei einer Brennkraftmaschine der eingangs genannten Art das Prinzip der mehrflügeligen Kolbenmulde in abgewandelter Form eingesetzt. Durch geeignete Ausgestaltung der Mulde wird erreicht, daß der Drallwirbel durch den Eintritt in die Mulde während der Kompression in Teilwirbel entsprechend der Flügelzahl der Mulde zerteilt wird, was zu Kollision der gegenüberliegenden Strömungen und damit zur Turbulenzproduktion in Zylindermitte führt. Bei der Aufteilung des Hauptwirbels in die Teilwirbel erfolgt eine Erhöhung der Umdrehungsgeschwindigkeit aufgrund der Verringerung des Wirbeldurchmessers (Drallerhaltung), was die Beeinflussung einer eingespritzten Kraftstoffwolke durch diese Strömung verstärkt.

Bei niedrigen Motorlasten und damit kleinen Gemischmengen, die eine besonders starke Schichtung der Luft-Gemischverteilung im Brennraum erfordern, erfolgt die Gemischeinbringung vorzugsweise sehr spät in der Kompressionsphase. Die Zylinderfüllung befindet sich damit bereits zum überwiegenden Teil in der Kolbenmulde d.h. die von der Kolbenmulde erzeugte umgeformte Strömungsbewegung stellt die dominierende Strömungsform im Brennraumvolumen dar. Das Einspritzorgan ist so angeordnet, daß der Einspritzstrahl von der exzentrisch zur Zylinderachse gelegenen Position des Einspritzorgans auf die Zylinderachse gerichtet in den Brennraum gelangt. Die Position des Einspritzorgans gegenüber der Kolbenmulde ist so eingerichtet, daß die Einspritzung in nur einen der beiden in der Mulde ausgebildeten Teilwirbel erfolgt. Die Zündkerze ist im Bereich der Brennraummitte angeordnet.

Mit dieser Einbringung des Kraftstoffes werden zwei Ziele verfolgt:
1. Da die beiden Teilwirbel stabile Strömungsstrukturen darstellen und in der Brennraummitte trotz der dort auftretenden Turbulenzproduktion nur ein geringer Gasaustausch zwischen den beiden Teilwirbeln erfolgt, wird auf diese Weise die Luftmenge, die an der weiteren Verdünnung des Gemisches teilnimmt, verringert.
2. Teile des vorzugsweise kegelförmigen Einspritzstrahls sowie die Randbereiche der in einem Teilwirbel befindlichen Gemischwolke werden in die zentral im Brennraum sich ausbildende Zone erhöhter Turbulenz transportiert. Dies wiederum stellt die beschleunigte Aufbereitung des stark unterstöchiometrisch. eingespritzten Gemisches zu zündfähigem, vorzugsweise stöchiometrischem Gemisch in der unmittelbaren Nähe der etwa in Brennraummitte angeordneten Zündkerze bei gleichzeitig günstigen Zündbedingungen (erhöhte Turbulenz, geringe mittlere Geschwindigkeit) sicher. Damit werden alle zu stellenden Anforderungen zur Realisierung des angestrebten Brennverfahrens erfüllt:
   - Das eingespritzte oder eingeblasene Gemisch wird in einem Teilwirbel zu einer örtlich begrenzten und stabilen Gemischwolke eingeschlossen.
   - In der Zone erhöhter Turbulenzproduktion in Brennraummitte erfolgt eine beschleunigte Aufbereitung zu zündfähigem Gemisch.
   - Im Bereich der zentral angeordneten Zündkerze herrscht aufgrund der zur Zylindermitte symmetrischen Strömung eine geringe mittlere Geschwindigkeit bei gleichzeitig hoher Turbulenzintensität, was die Entflammung des Gemisches begünstigt.

Die in der EP 0 741 237 A1 gezeigte Brennraumgestaltung eignet sich vor allem für Brennkraftmaschinen mit zentraler Zündeinrichtung und - zur Realisierung optimaler Ventilgrößen - vier Ventilen pro Zylinder.

Aufgabe der vorliegenden Erfindung ist es, die eingangs genannte Brennkraftmaschine weiterzuentwickeln und das beschriebene Brennverfahren auch für exzentrisch angeordnete Zündeinrichtungen zu realisieren.

Erfindungsgemäß wird dies dadurch erreicht, daß die Brennraumdeckfläche zumindest einen als zweite Strömungsleitflächen für die Drallströmung ausgebildeten Vorsprung aufweist, wobei - im Grundriß betrachtet - die durch zumindest eine Erhebung im Kolbenboden gebildeten ersten Strömungsleitflächen und die zweiten Strömungsleitflächen asymmetrisch und zueinander versetzt ausgebildet sind, wobei die Einspritzung des Kraftstoffes nahe der oberen Totpunktlage des Kolbens überwiegend in den die exzentrisch angeordnete Zündeinrichtung aufweisenden Teilraum erfolgt. Die Erhebungen im Kolbenboden bzw. die Vorsprünge in der Brennraumdeckfläche können dabei mit korrespondierenden Vertiefungen oder Ausnehmungen in der Brennraumdeckfläche bzw. im Kolbenboden im oberen Totpunkt des Kolbens zusammenwirken

Dadurch, das die Strömungsleitflächen zum Teil durch die Brennraumdeckfläche gebildet wird, ergibt sich ein hoher Gestaltungsfreiraum für die Anordnung der Zündeinrichtung und der Ein- und Auslaßventile. Somit können auch Brennkraftmaschinen mit nur zwei oder drei Ventilen für die Anwendung eines auf einer Drallströmung basierenden Brennverfahrens bei direkter Einspritzung des Kraftstoffes eingesetzt werden. Da bei Zweiventilmotoren ein relativ geringer Oberflächenanteil von den Ventilen beansprucht wird, bietet die Brennraumoberfläche ausreichende Gestaltungsmöglichkeiten, so daß die beschriebene Strömungsumformung auch bei einer zur Erzielung optimaler Ventilgrößen exzentrisch angeordneten Zündeinrichtung realisiert werden kann.

Ähnliche Verhältnisse ergeben sich bei Brennkraftmaschinen mit drei Ventilen, nämlich zwei Einlaß- und einem Auslaßventil. Auch hier kann vor allem bei kleinen Ventilwinkeln erfolgreich ein auf einer Drallströmung basierendes Brennverfahren realisiert werden. Zur Erzeugung der Drallströmung wird vorzugsweise einer der beiden Einlaßkanäle als Drallkanal ausgeführt und der zweite Einlaßkanal mit einer Abschaltvorrichtung versehen. Auch hier ergibt sich eine exzentrische Zündkerzenlage.

Unter Berücksichtigung der konstruktiven Gegebenheiten von Motoren mit nur 2 oder 3 Ventilen (1 bzw. 2 Einlaßventile und 1 Auslaßventil) wird somit gemäß der Erfindung die für die Umformung der Drallströmung erforderliche Brennraumform nicht ausschließlich in Form einer Kolbenmulde ausgeführt, sondern es werden auch die übrigen Brennraumoberflächen im Zylinderkopf mit in das Konzept einbezogen.

Das Grundprinzip des in der EP 741 237 A1 dargestellten Verfahrens besteht in der Erzeugung von Strömungskollision in der Zylindermitte während dem Ende der Kompressionsphase. Dies wird durch entsprechend geformte Einzüge der Kolbenmulde erreicht.

Ein erfindungsgemäßer Weg, diese Strömungsumformung insbesondere in einem Zweiventilmotor zu erreichen, besteht darin, die Einschnürung nicht mehr ausschließlich in der Kolbenmulde anzuordnen, sondern teilweise in den Zylinderkopf zu verlagern. Hier kann die das Einlaßventil umgebende Brennraumkontur die strömungsleitende Funktion einer der Einschnürungen übernehmen, während die gegenüberliegende Einschnürung weiterhin in der Kolbenoberfläche angeordnet wird. Die Strömungsleitflächen im Kolbenboden und/oder im Zylinderkopf laufen dabei zur Zylinderwand hin aus.

Bei Brennkraftmaschinen mit drei Ventilen, die üblicherweise einen Ventilwinkel zwischen Ein- und Auslaßseite aufweisen, werden die Strömungsleitflächen weiterhin überwiegend im Kolben ausgeführt, wobei diese nur teilweise in Form einer Mulde im Kolben liegen und teilweise durch Erhebungen gebildet werden, die über eine durch die Kolbenaußenkante aufgespannte Bezugsebene hinausragen. Ergänzt wird diese Oberfläche durch korrespondierende Vorsprünge in der Brennraumdachfläche in der Umgebung der Ventile unter Ausnutzung der konstruktiven Erfordernisse der Anordnung von Ventilen und Zündkerze.

Die Mündungen der Einspritzeinrichtung und der Zündeinrichtung befinden sich vorteilhafterweise im gleichen Teilraum des Brennraumes. Vorzugsweise ist dabei vorgesehen, daß die beiden Teilräume unterschiedlich groß ausgebildet sind, und die Zündeinrichtung in dem größeren der beiden Teilbrennräumen angeordnet ist.

Die Strömungsumformung und Turbulenzproduktion wird begünstigt, wenn die Strömungsleitflächen im Kolbenboden und/oder in der Brennraumdeckfläche im wesentlichen die Form des Buchstabens "ε" oder "ω" aufweisen.

Bei Ausführungen mit einem zweigeteilten Brennraum ist es zur Erzielung einer schnellen Aufbereitung der Gemischwolke zu zündfähigem Gemisch vorteilhaft, wenn die Einschnürung im Übergangsbereich zwischen den beiden Teilräumen eine lichte Weite etwa von mindestens 0,2 und höchstens 0,7 mal dem Zylinderdurchmesser aufweisen.

Die Erfindung wird anhand der Figuren näher erläutert.

Es zeigen:
- Fig. 1: einen Zylinder einer erfindungsgemäßen Brennkraftmaschine mit zwei Ventilen pro Zylinder gemäß der Linie I-I in Fig. 2,
- Fig. 2: eine Draufsicht auf den Kolben aus Fig. 1,
- Fig. 3: einen Längsschnitt durch einen Zylinder einer erfindungsgemäßen Brennkraftmaschine mit drei Ventilen pro Zylinder gemäß der Linie III-III in Fig. 4 und
- Fig. 4: eine Draufsicht auf den Kolben aus Fig. 3.

Die gleichen Teile sind in den Ausführungsvarianten mit gleichen Bezugszeichen versehen.

Der Zylinder 1 weist einen hin- und hergehenden Kolben 2 auf, dessen Kolbenboden 3 mit der durch den Zylinderkopf 4 gebildeten Brennraumdeckfläche 5 den Brennraum 6 bildet, welcher durch Einschnürungen 7, 8 in zwei Teilräume 9, 10 unterschiedlicher Größe unterteilt ist. Zumindest eine Einschnürung 7 wird durch Erhebungen 11 im Kolbenboden 3 gebildet. In einen Teilraum 9 mündet die Einspritzeinrichtung 12, deren Mündung mit 12a bezeichnet ist. Die Einspritzung des Kraftstoffes ist mit den Linien 12b angedeutet. Im gleichen Teilraum 9 ist auch die Mündung 13a einer exzentrisch angeordneten Zündeinrichtung 13 vorgesehen. Die Wände der Teilräume 9, 10 sind als Strömungsleitflächen 14, 15 für die sich im Brennraum 9 ausbildende Drallströmung ausgebildet. Die erste Strömungsleitfläche 14 wird dabei durch die Erhebungen 11 im Kolbenboden 3 gebildet, die über eine von der Kolbenaußenkante 2a aufgespannte Bezugsebene 2b hinausragen. Die zweite Strömungsleitfläche 15 wird von Vorsprüngen 18 in der Brennraumdeckfläche 5 gebildet. Die ersten und zweiten Strömungsleitflächen 14, 15 sind - im Grundriß betrachtet - asymmetrisch und zueinander versetzt angeordnet und formen gemeinsam unterschiedlich große Teilräume 9 und 10. Jede der Strömungsleitflächen 14 und 15 weist dabei im wesentlichen die Form des Buchstabens "ε" bzw. "ω" auf.

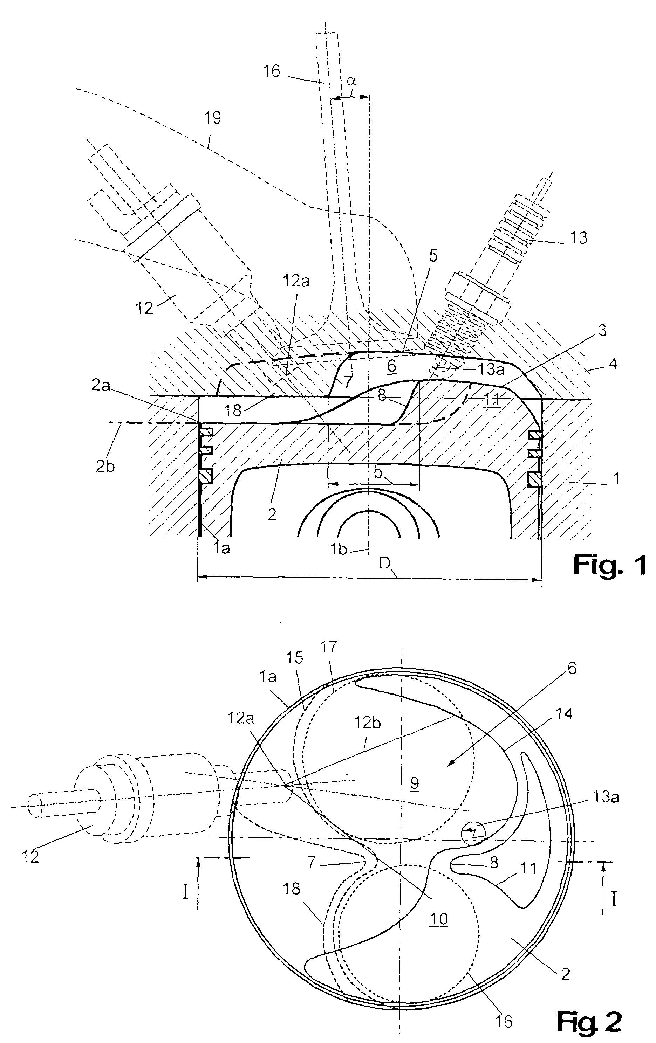

Bei der in Fig. 1 und 2 gezeigten Ausführungsvariante ist ein Einlaßventil 16 und ein Auslaßventil 17 vorgesehen. Mit Bezugszeichen 19 ist der Einlaßkanal bezeichnet. Die Erhebung 11 im Kolbenboden 3 ist dabei so gestaltet, daß die Strömungsleitfläche 14 in Richtung zur Zylinderwand 1a hin auslauft. Ähnliches gilt für die zweite Strömungsleitfläche 15 in der Brennraumdeckfläche 5.

Im Grundriß betrachtet, weist die Einschnürung 7, zwischen den beiden Teilräumen 9, 10 eine lichte Weite b von mindestens 0,2 und höchstens 0,7 mal dem Zylinderdurchmesser D auf.

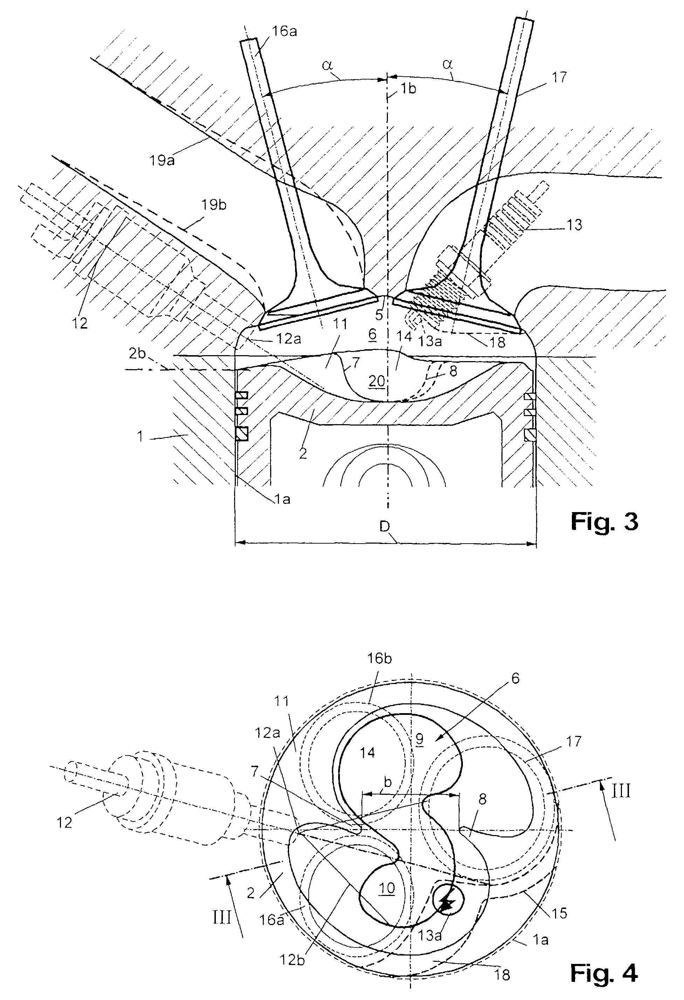

Bei der in Fig. 3 und 4 gezeigten Ausführungsvariante sind pro Zylinder 1 zwei Einlaßventile 16a, 16b und ein Auslaßventil 17 vorgesehen. Die Einlaßventile 16a, 16b und das Auslaßventil 17 sind gegenüber der Zylinderachse 1b um einen geringen Ventilwinkel α geneigt. Einer der beiden Einlaßkanäle 19a, 19b ist als Drallkanal ausgeführt. Der andere Einlaßkanal 19a kann mit einer nicht weiter dargestellten Abschaltvorrichtung versehen sein. Die erste Strömungsleitfläche 14 ist dabei überwiegend im Kolben 2 ausgeführt, wobei diese nur teilweise in Form einer Mulde 20 im Kolben liegt und teilweise durch Erhebungen 11 gebildet wird, die über die von der Kolbenaußenkante 2a aufgespannte Bezugsebene 2b hinausragen. Ergänzt wird diese Oberfläche durch korrespondierende Vorsprünge 18 in der Brennraumdachfläche 5 in der Umgebung der Ventile 16a, 17.

Dadurch, daß zusätzlich zu den ersten Strömungsleitflächen 14 im Kolbenboden. 3 zweite Strömungsleitflächen 15 in der Brennraumdeckfläche 5 vorgesehen sind, läßt sich auch bei asymmetrischer Anordnung der Ventile 16, 16a, 16b, 17 und/oder Zündeinrichtung 13 eine optimale Aufbereitung des unterstöchiometrisch im Brennraum eingebrachten Gemisches zu zündfähigem Gemisch realisieren.

## Patentansprüche

1. Viertakt-Brennkraftmaschine mit Fremdzündung und direkter Einspritzung des Kraftstoffes in den Brennraum (6), mit einem hin- und hergehenden Kolben (2) pro Zylinder (1) und einer vom Zylinderkopf (4) gebildeten Brennraumdeckfläche (5) mit mindestens einem Auslaßventil (17) und mindestens einem Einlaßventil (16, 16a, 16b), mit mindestens einem drallerzeugend ausgebildeten Einlaßkanal (19, 19a, 19b), sowie einer exzentrisch in den Brennraum (6) mündenden Kraftstoffeinspritzeinrichtung (12) und einer in der Brennraumdeckfläche (5) angeordneten Zündeinrichtung (13), wobei der durch Kolben (2) und Zylinderkopf (4) gebildete Brennraum (6) durch zumindest zum Teil durch den Kolben (2) gebildete Einschnürungen (7, 8) in mindestens zwei Teilräume (9, 10) unterteilt ist und die vom Kolbenboden (3) gebildeten Wände der Teilräume (9, 10) als erste Strömungsleitflächen (14) für die Drallströmung ausgebildet sind, **dadurch gekennzeichnet,** daß die Brennraumdeckfläche (5) zumindest einen als zweite Strömungsleitflächen (15) für die Drallströmung ausgebildeten Vorsprung (18) aufweist, wobei - im Grundriß betrachtet - die durch zumindest eine Erhebung (11) im Kolbenboden (3) gebildeten ersten Strömungsleitflächen (14) und die zweiten Strömungsleitflächen (15) asymmetrisch und zueinander versetzt ausgebildet sind, wobei die Einspritzung des Kraftstoffes nahe der oberen Totpunktlage des Kolbens (2) überwiegend in den die exzentrisch angeordnete Zündeinrichtung (13) aufweisenden Teilraum (9, 10) erfolgt.

2. Brennkraftmaschine nach Anspruch 1, **dadurch gekennzeichnet,** daß die Mündungen (12a, 13a) der Zündeinrichtung (12) und der Einspritzeinrichtung (13) im gleichen Teilraum (9, 10) des Brennraumes (6) angeordnet sind.

3. Brennkraftmaschine nach Anspruch 1 oder 2, **dadurch gekennzeichnet,** daß die Strömungsleitflächen (14, 15) im Kolbenboden (3) und/oder in der Brennraumdeckfläche (5) im wesentlichen die Form des Buchstabens "ε" oder "ω" aufweisen.

4. Brennkraftmaschine nach einem der Ansprüche 1 bis 3, **dadurch gekennzeichnet,** daß die Einschnürungen (7, 8) teilweise durch den Zylinderkopf (4) gebildet sind.

5. Brennkraftmaschine nach einem der Ansprüche 1 bis 4, **dadurch gekennzeichnet,** daß die Strömungsleitflächen (14, 15) im Kolben (2) und/oder im Zylinderkopf (4) in Richtung zur Zylinderwand (1a) hin ausläufen.

6. Brennkraftmaschine nach einem der Ansprüche 1 bis 5, **dadurch gekennzeichnet,** daß die ersten Strömungsleitflächen (14) im Kolbenboden (3) überwiegend durch die Wände einer Kolbenmulde (20) gebildet sind.

7. Brennkraftmaschine nach einem der Ansprüche 1 bis 6, **dadurch gekennzeichnet,** daß die Einschnürungen (7, 8) im Übergangsbereich zwischen den beiden Teilräumen (9, 10) eine lichte Weite (b) etwa von mindestens 0,2 und höchstens 0,7 mal dem Zylinderdurchmesser (D) aufweisen.

8. Brennkraftmaschine nach einem der Ansprüche 1 bis 7, **dadurch gekennzeichnet,** daß die beiden Teilräume (9, 10) unterschiedlich groß ausgebildet sind, und die Zündeinrichtung (11) in dem größeren der beiden Teilräumen angeordnet ist.

9. Brennkraftmaschine nach einem der Ansprüche 1 bis 8, **dadurch gekennzeichnet,** daß pro Zylinder (1) ein Auslaßventil (17) und ein Einlaßventil (16) vorgesehen sind.

10. Brennkraftmaschine nach einem der Ansprüche 1 bis 8, **dadurch gekennzeichnet,** daß pro Zylinder ein Auslaßventil (17) und zwei Einlaßventile (16a, 16b) vorgesehen sind.

11. Brennkraftmaschine nach einem der Ansprüche 1 bis 10, **dadurch gekennzeichnet**, daß die Erhebung (11) im Kolbenboden (3) zumindest teilweise über eine von der Kolbenaußenkante (2a) aufgespannte Bezugsebene (2b) hinausragt.

12. Brennkraftmaschine nach einem der Ansprüche 1 bis 11, **dadurch gekennzeichnet,** daß die Erhebung (11) im Kolbenboden (3) bzw. der Vorsprung (18) in der Brennraumdeckfläche (5) mit einer korrespondierenden Vertiefung oder Ausnehmung in der Brennraumdeckfläche (5) bzw. im Kolbenboden im oberen Totpunkt des Kolbens zusammenwirkt.

## Claims

1. Four-stroke spark-ignited internal combustion engine with direct fuel injection into the combustion chamber (6), with a reciprocating piston (2) for each cylinder (1) and a combustion chamber top face (5), which is formed by the cylinder head (4) and is provided with at least one exhaust valve (17) and at least one intake valve (16, 16a, 16b), and with at least one intake port (19, 19a, 19b) configured so as to generate a swirl, and with a fuel injection device (12) entering the combustion chamber (6) excentrically, and with an ignition device (13) positioned in the combustion chamber top face (5), the combustion chamber (6) formed by the piston (2) and the cylinder head (4) being divided into at least two partial chambers (9, 10) by means of restrictions (7, 8) which are at least partly formed in the piston (2), and the walls of the partial chambers (9, 10) formed by the piston top (3) being configured as first flow guiding surfaces (14) for the swirl flow, **characterised in that** the combustion chamber top face (5) has at least one projection (18) serving as a second flow guiding surface (15) for the swirl flow, where - in the plan view - the first flow guiding surface (14) formed by a ridge (11) in the piston top and the second flow guiding surface (15) are configured asymmetrically and set off against each other, and where fuel injection in top dead center position of the piston (2) takes place mainly into the partial chamber(9, 10) corresponding to the excentrically positioned ignition device (13).

2. Internal combustion engine according to claim 1, **characterised in that** the entry points (12a, 13a) of the ignition device (12) and the injection device (13) are positioned in one and the same partial chamber (9, 10) of the combustion chamber (6).

3. Internal combustion engine according to claim 1 or 2, **characterised in that** the flow guiding surfaces (14, 15) in the piston top (3) and/or in the combustion chamber top face (5) have essentially the form of the letter "ε" or "ω".

4. Internal combustion engine according to any of claims 1 to 3, **characterised in that** the restrictions (7, 8) are partly formed by the cylinder head (4).

5. Internal combustion engine according to any of claims 1 to 4, **characterised in that** the flow guiding surfaces (14, 15) in the piston (2) and/or in the cylinder head (4) taper off in the direction towards the cylinder wall (la).

6. Internal combustion engine according to any of claims 1 to 5, **characterised in that** the first flow guiding surfaces (14) in the piston top (3) are primarily formed by the walls of a piston recess (20).

7. Internal combustion engine according to any of claims 1 to 6, **characterised in that** the restrictions (7, 8) in the transition region between the two partial chambers (9, 10) have a distance (b) of at least 0,2 times and at most 0,7 times the cylinder diameter (D).

8. Internal combustion engine according to any of claims 1 to' 7, **characterised in that** the two partial chambers (9, 10) are of different size, and that the ignition device (11) is positioned in the larger one of the two partial chambers.

9. Internal combustion engine according to any of claims 1 to 8, **characterised in that** one intake valve (16) and one exhaust valve (17) are provided for each cylinder (1).

10. Internal combustion engine according to any of claims 1 to 8, **characterised in that** two intake valves (16a, 16b) and one exhaust valve (17) are provided for each cylinder.

11. Internal combustion engine according to any of claims 1 to 10, **characterised in that** the ridge (11) in the piston top (3) protrudes at least partly beyond a reference plane (2b) defined by the outer rim (2a) of the piston.

12. Internal combustion engine according to any of claims 1 to 11, **characterised in that** the ridge (11) in the piston top (3), respectively the projection (18) in the combustion chamber top face (5), cooperates with a corresponding recess or depression in the combustion chamber top face (5), respectively the piston top, in top dead center position of the piston.

## Revendications

1. Moteur à quatre temps à combustion interne, à allumage commandé et injection directe du carburant dans la chambre de combustion (6), dans lequel :
- un piston (2) circule en va et vient dans chaque cylindre (1),
- un couvercle (5) de chambre de combustion constitué par la culasse (4) comporte au moins une soupape d'échappement (17), au moins une soupape d'admission (16, 16a, 16b) , au moins un canal d'admission (19, 19a, 19b) formé pour créer un tourbillon, ainsi qu'un dispositif d'injection de carburant (12) débouchant excentriquement dans la chambre de combustion (6) et un - dispositif d'allumage (13) monté dans le couvercle (5),
- la chambre de combustion (6), délimitée par le piston (2) et la culasse (4), est divisée par des cordons (7, 8) que présente le piston (2) en au moins deux chambres élémentaires (9, 10) dont les parois, constituées par le fond (3) du piston, sont configurées en tant que portées directrices (14) de l'écoulement tourbillonnaire,
caractérisé en ce que
le couvercle (5) de la chambre de combustion présente au moins une saillie (18) configurée en tant que seconde portée directrice (15) de l'écoulement tourbillonnaire de sorte que - vues en plan - les premières portées directrices d'écoulement (14), formées par au moins une saillie (11) du fond de piston (3), et les secondes portées directrices d'écoulement (15), sont asymétriques et décalées les unes par rapport aux autres, l'injection du carburant, quand le piston (2) est près de son point mort haut, s'effectuant principalement dans la chambre élémentaire (9, 10) où se trouve le dispositif d'allumage (13) monté excentriquement.

2. Moteur à combustion interne selon la revendication 1,
caractérisé en ce que
les embouchures (12a, 13a) du dispositif d'injection (12) et du dispositif d'allumage (13) se trouvent dans la même chambre élémentaire (9, 10) de la chambre de combustion (6).

3. Moteur à combustion interne selon la revendication 1 ou 2,
caractérisé en ce que
les portées directrices d'écoulement (14, 15) situées dans le fond (3) du piston et/ou dans le couvercle (5) de la chambre de combustion ont sensiblement la forme d'un « ε » ou d'un « ω ».

4. Moteur à combustion interne selon l'une quelconque des revendications 1 à 3,
caractérisé en ce que
les cordons (7, 8) sont formés en partie par la culasse (4).

5. Moteur à combustion interne selon l'une quelconque des revendications 1 à 4,
caractérisé en ce que
'les portées directrices d'écoulement (14, 15), situées dans le piston (2) et/ou dans la culasse (4), se développent en direction de la paroi (la) du cylindre.

6. Moteur à combustion interne selon l'une quelconque des revendications 1 à 5,
caractérisé en ce que
les premières portées directrices d'écoulement (14), situées dans le fond (3) du piston, sont constituées principalement par les parois d'une cuvette (20) du piston.

7. Moteur à combustion interne selon l'une quelconque des revendications 1 à 6,
caractérisé en ce que
les cordons (7, 8) laissent, dans la zone de transition entre les deux chambres élémentaires (9, 10), un passage libre dont la largeur (b) est égale à 0,2 fois au moins et 0,7 fois au plus le diamètre (D) du cylindre.

8. Moteur à combustion interne selon l'une quelconque des revendications 1 à 7,
caractérisé en ce que
les deux chambres élémentaires (9, 10) ont des grandeurs différentes et le dispositif d'allumage (13) est situé dans la plus grande chambre.

9. Moteur à combustion interne selon l'une quelconque des revendications 1 à 8,
caractérisé en ce qu'
il est prévu une soupape d'admission (16) et une soupape d'échappement (17) par cylindre (1).

10. Moteur à combustion interne selon l'une quelconque des revendications 1 à 8,
caractérisé en ce qu'
il est prévu deux soupapes d'admission (16a, 16b) et une soupape d'échappement (17) par cylindre (1).

11. Moteur à combustion interne selon l'une quelconque des revendications 1 à 10,
caractérisé en ce que
la saillie (11) sur le fond (3) du piston dépasse au moins en partie un plan de référence (2b) défini par le bord externe (2a) du piston.

12. Moteur à combustion interne selon l'une quelconque des revendications 1 à 11,
caractérisé en ce que
la saillie (11) sur le fond (3) du piston et la saillie (18) sur le couvercle (5) de la chambre de combustion coopèrent au point mort haut du piston avec un creux ou un évidement correspondant que présente le couvercle (5) ou le fond (3) respectivement.
